(19) Europäisches Patentamt
European Patent Office
Office européen des brevets

(11) EP 4 763 912 A1

(12) **EUROPEAN PATENT APPLICATION**
published in accordance with Art. 153(4) EPC

(43) Date of publication:
**24.06.2026 Bulletin 2026/26**

(21) Application number: **25776923.2**

(22) Date of filing: **28.03.2025**

(51) International Patent Classification (IPC):
***C08L 27/12*** (2006.01) ***C08K 5/353*** (2006.01)
***C08L 51/06*** (2006.01) ***C08L 53/00*** (2006.01)
***C08L 67/03*** (2006.01) ***C08L 79/08*** (2006.01)
***C08L 81/04*** (2006.01) ***C08L 81/06*** (2006.01)

(52) Cooperative Patent Classification (CPC):
**C08K 5/353; C08L 27/12; C08L 51/06; C08L 53/00; C08L 67/03; C08L 79/08; C08L 81/04; C08L 81/06**

(86) International application number:
**PCT/JP2025/012717**

(87) International publication number:
**WO 2025/206290 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2024 JP 2024056820**

(71) Applicant: **Daikin Industries, Ltd.**
**Osaka-shi, Osaka 530-0001 (JP)**

(72) Inventors:
- **YAMAGUCHI, Shuhei**
  **Osaka-Shi, Osaka 530-0001 (JP)**
- **TANAKA, Yuhei**
  **Osaka-Shi, Osaka 530-0001 (JP)**
- **SEKI, Toyomitsu**
  **Osaka-Shi, Osaka 530-0001 (JP)**
- **KOMORI, Masaji**
  **Osaka-Shi, Osaka 530-0001 (JP)**
- **YAMAUCHI, Akiyoshi**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **RESIN COMPOSITION, MOLDED BODY, AND COMPATIBILIZER**

(57) The disclosure aims to provide a resin composition in which a fluororesin can uniformly mix with a high performance engineering plastic resin, as well as a molded body and a compatibilizer. The resin composition of the disclosure includes a fluororesin, a high performance engineering plastic resin, and a compatibilizer, the compatibilizer including a block polymer or a graft polymer each containing a fluorinated polymer segment and a non-fluorinated polymer segment, and a functional compound, the high performance engineering plastic resin including a monomer different from a monomer in the non-fluorinated polymer segment.

FIG.1

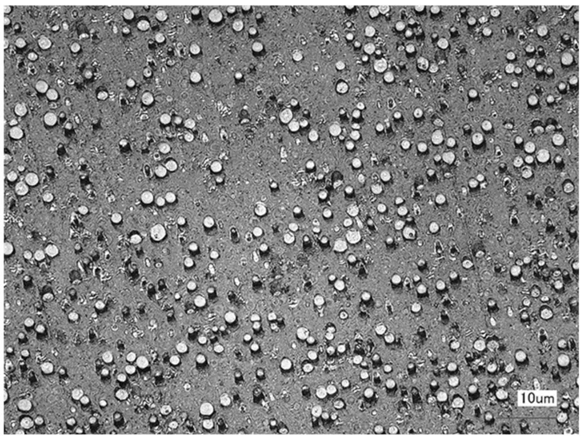


EP 4 763 912 A1

## Description

TECHNICAL FIELD

The disclosure relates to resin compositions, molded bodies, and compatibilizers.

BACKGROUND ART

In the fields of automobiles and semiconductors, there is a demand for the development of composite materials of fluororesins and high performance engineering plastic resins. However, since fluororesins are poorly compatible with other resins, they are difficult to uniformly mix with high performance engineering plastic resins by usual kneading techniques or under usual kneading conditions.
A known technique uses a compatibilizer to uniformly mix fluororesins with high performance engineering plastic resins (see, for example, Patent Literature 1).

CITATION LIST

- Patent Literature

Patent Literature 1: JP 2023-540107 T

SUMMARY OF INVENTION

- Technical Problem

The disclosure aims to provide a resin composition in which a fluororesin can uniformly mix with a high performance engineering plastic resin, as well as a molded body and a compatibilizer.

- Solution to Problem

The disclosure (1) relates to a resin composition containing a fluororesin, a high performance engineering plastic resin, and a compatibilizer, the compatibilizer including a block polymer or a graft polymer each containing a fluorinated polymer segment and a non-fluorinated polymer segment, and a functional compound, the high performance engineering plastic resin including a monomer different from a monomer in the non-fluorinated polymer segment.
The disclosure (2) relates to the resin composition according to the disclosure (1), wherein the fluororesin includes a perfluororesin.
The disclosure (3) relates to the resin composition according to the disclosure (1) or (2), wherein the fluororesin includes at least one selected from the group consisting of a tetrafluoroethylene/perfluoro(alkyl vinyl ether) copolymer and a tetrafluoroethylene/hexafluoropropylene copolymer.
The disclosure (4) relates to the resin composition according to any one of the disclosures (1) to (3), wherein the high performance engineering plastic resin includes at least one selected from the group consisting of a liquid crystal polymer, polyetherimide, polyphenylene sulfide, polyaryletherketone, polysulfone, and polyethersulfone.
The disclosure (5) relates to the resin composition according to any one of the disclosures (1) to (4), wherein the high performance engineering plastic resin includes at least one selected from the group consisting of polyphenylene sulfide and polyethersulfone.
The disclosure (6) relates to the resin composition according to any one of the disclosures (1) to (5), wherein the compatibilizer is contained in an amount of 1 to 30% by mass.
The disclosure (7) relates to the resin composition according to any one of the disclosures (1) to (6), wherein the compatibilizer is contained in an amount of 5 to 20% by mass.
The disclosure (8) relates to the resin composition according to any one of the disclosures (1) to (7), wherein a mass ratio of the fluororesin to the high performance engineering plastic resin, fluororesin/high performance engineering plastic resin, is 99/1 to 50/50.
The disclosure (9) relates to the resin composition according to any one of the disclosures (1) to (8), wherein a mass ratio of the fluororesin to the high performance engineering plastic resin, fluororesin/high performance engineering plastic resin, is 90/10 to 70/30.
The disclosure (10) relates to the resin composition according to any one of the disclosures (1) to (9), wherein a fluorinated polymer in the fluorinated polymer segment has a melt flow rate of 60 g/10 min or more.
The disclosure (11) relates to the resin composition according to any one of the disclosures (1) to (10), wherein

the fluorinated polymer in the fluorinated polymer segment has a melt flow rate of 60 to 300 g/10 min.

The disclosure (12) relates to the resin composition according to any one of the disclosures (1) to (11), wherein the fluorinated polymer in the fluorinated polymer segment has 150 or more end functional groups per $10^6$ carbon atoms in the main chain.

The disclosure (13) relates to the resin composition according to any one of the disclosures (1) to (12), wherein the fluorinated polymer in the fluorinated polymer segment has 150 to 2,000 end functional groups per $10^6$ carbon atoms in the main chain.

The disclosure (14) relates to the resin composition according to any one of the disclosures (1) to (13), wherein the fluorinated polymer in the fluorinated polymer segment includes a perfluororesin.

The disclosure (15) relates to the resin composition according to any one of the disclosures (1) to (14), wherein the fluorinated polymer in the fluorinated polymer segment includes at least one selected from the group consisting of a tetrafluoroethylene/perfluoro(alkyl vinyl ether) copolymer and a tetrafluoroethylene/hexafluoropropylene copolymer.

The disclosure (16) relates to the resin composition according to any one of the disclosures (1) to (15), wherein the functional compound includes a monomer capable of forming an amorphous high performance engineering plastic resin.

The disclosure (17) relates to the resin composition according to any one of the disclosures (1) to (16), wherein the functional compound includes at least one selected from the group consisting of an acid anhydride and diamine.

The disclosure (18) relates to the resin composition according to any one of the disclosures (1) to (17), wherein the functional compound includes at least one selected from the group consisting of 4,4'-(hexafluoroisopropylidene) diphthalic anhydride and 4,4'-oxydianiline.

The disclosure (19) relates to the resin composition according to any one of the disclosures (1) to (18), wherein a non-fluorinated polymer in the non-fluorinated polymer segment has a glass transition temperature of 180°C or higher.

The disclosure (20) relates to the resin composition according to any one of the disclosures (1) to (19), wherein the non-fluorinated polymer in the non-fluorinated polymer segment includes at least one selected from the group consisting of a liquid crystal polymer, polyetherimide, polyphenylene sulfide, polyaryletherketone, polysulfone, and polyethersulfone.

The disclosure (21) relates to the resin composition according to any one of the disclosures (1) to (20), further containing an oxazoline group-containing compound.

The disclosure (22) relates to the resin composition according to any one of the disclosures (1) to (21), which is solid or liquid at 25°C.

The disclosure (23) relates to a molded body using the resin composition according to any one of the disclosures (1) to (22).

The disclosure (24) relates to a compatibilizer including a block copolymer or a graft polymer each containing a fluorinated polymer segment and a non-fluorinated polymer segment, and a functional compound, a fluorinated polymer in the fluorinated polymer segment having a melt flow rate of 60 g/10 min or more, the fluorinated polymer in the fluorinated polymer segment having 150 or more end functional groups per $10^6$ carbon atoms in the main chain.

The disclosure (25) relates to the compatibilizer according to the disclosure (24), which is for use in a resin composition containing a fluororesin and a high performance engineering plastic resin, wherein the high performance engineering plastic resin includes a monomer different from a monomer in the non-fluorinated polymer segment.

The disclosure (26) relates to the compatibilizer according to the disclosure (24) or (25), wherein a fluorinated polymer in the fluorinated polymer segment has a melt flow rate of 60 to 300 g/10 min.

The disclosure (27) relates to the compatibilizer according to any one of the disclosures (24) to (26), wherein the fluorinated polymer in the fluorinated polymer segment has 150 to 2,000 end functional groups per $10^6$ carbon atoms in the main chain.

- Advantageous Effects of Invention

The disclosure can provide a resin composition in which a fluororesin can uniformly mix with a high performance engineering plastic resin, as well as a molded body and a compatibilizer.

BRIEF DESCRIPTION OF DRAWINGS

FIG. 1 shows a micrograph showing the dispersion state of Example 1.
FIG. 2 shows a micrograph showing the dispersion state of Example 2.
FIG. 3 shows a micrograph showing the dispersion state of Example 3.
FIG. 4 shows a micrograph showing the dispersion state of Example 4.

FIG. 5 shows a micrograph showing the dispersion state of Example 5.
FIG. 6 shows a micrograph showing the dispersion state of Comparative Example 1.
FIG. 7 shows a micrograph showing the dispersion state of Example 6.
FIG. 8 shows a micrograph showing the dispersion state of Comparative Example 2.

## DESCRIPTION OF EMBODIMENTS

The "organic group" herein means a group containing at least one carbon atom or a group formed by removing one hydrogen atom from an organic compound.

Examples of the "organic group" include

an alkyl group optionally containing at least one substituent,
an alkenyl group optionally containing at least one substituent,
an alkynyl group optionally containing at least one substituent,
a cycloalkyl group optionally containing at least one substituent,
a cycloalkenyl group optionally containing at least one substituent,
a cycloalkadienyl group optionally containing at least one substituent,
an aryl group optionally containing at least one substituent,
an aralkyl group optionally containing at least one substituent,
a non-aromatic heterocyclic group optionally containing at least one substituent,
a heteroaryl group optionally containing at least one substituent,
a cyano group,
a formyl group,
RaO-,
RaCO-,
$RaSO_2$-,
RaCOO-,
RaNRaCO-,
RaCONRa-,
RaOCO-,
$RaOSO_2$-, and,
$RaNRbSO_2$-
wherein the Ra groups are each independently
an alkyl group optionally containing at least one substituent,
an alkenyl group optionally containing at least one substituent,
an alkynyl group optionally containing at least one substituent,
a cycloalkyl group optionally containing at least one substituent,
a cycloalkenyl group optionally containing at least one substituent,
a cycloalkadienyl group optionally containing at least one substituent,
an aryl group optionally containing at least one substituent,
an aralkyl group optionally containing at least one substituent,
a non-aromatic heterocyclic group optionally containing at least one substituent, or
a heteroaryl group optionally containing at least one substituent, and
the Rb groups are each independently H or an alkyl group optionally containing at least one substituent.

The organic group is preferably an alkyl group optionally containing at least one substituent.

The disclosure will be specifically described below.

### <Resin composition>

The resin composition of the disclosure contains a fluororesin, a high performance engineering plastic resin, and a compatibilizer, the compatibilizer including a block polymer or a graft polymer each containing a fluorinated polymer segment and a non-fluorinated polymer segment, and a functional compound, the high performance engineering plastic resin including a monomer different from a monomer in the non-fluorinated polymer segment.

The compatibilizer in the resin composition of the disclosure improves the compatibility of the fluororesin, so that the fluororesin can uniformly mix with the high performance engineering plastic resin.

According to a common knowledge in the art, a compatibilizer to be used in a composite material of a fluororesin and a high performance engineering plastic resin usually includes the same type of monomers as the high performance

engineering plastic resin. A compatibilizer including a monomer different from a monomer in the high performance engineering plastic resin cannot sufficiently exhibit its effect. In contrast, the compatibilizer in the resin composition of the disclosure sufficiently exhibits the effect as a compatibilizer even though it includes a monomer different from a monomer in the high performance engineering plastic resin, so that the fluororesin can uniformly mix with the high performance engineering plastic resin.

Examples of the fluororesin include polytetrafluoroethylene (PTFE), a tetrafluoroethylene (TFE)/perfluoro(alkyl vinyl ether) (PAVE) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, a CTFE/TFE/PAVE copolymer, and an Et/CTFE copolymer.

The fluororesin is preferably a perfluororesin, more preferably at least one selected from the group consisting of polytetrafluoroethylene (PTFE), a tetrafluoroethylene (TFE)/perfluoro(alkyl vinyl ether) (PAVE) copolymer (PFA), and a tetrafluoroethylene (TFE)/hexafluoropropylene (HFP) copolymer (FEP), still more preferably at least one selected from the group consisting of PFA and FEP, furthermore preferably PFA.

The PTFE may be a TFE homopolymer consisting only of a tetrafluoroethylene (TFE) unit or may be a modified PTFE containing a TFE unit and a modifying monomer unit based on a modifying monomer copolymerizable with TFE.

The modifying monomer may be any monomer copolymerizable with TFE, and examples thereof include a perfluoroolefin such as hexafluoropropylene (HFP); a chlorofluoroolefin such as chlorotrifluoroethylene (CTFE); a hydrogen-containing fluoroolefin such as trifluoroethylene and vinylidene fluoride (VdF); a perfluorovinyl ether; a perfluoroalkyl allyl ether; a (perfluoroalkyl)ethylene; and ethylene. One type or two or more types of modifying monomers may be used.

The perfluorovinyl ether is not limited, and may be, for example, an unsaturated perfluoro compound represented by the following formula (1):

$$CF_2=CF\text{-}ORf \qquad (1)$$

wherein Rf represents a perfluoro organic group. The term "perfluoro organic group" herein means an organic group in which all hydrogen atoms bonded to any carbon atom are replaced by fluorine atoms. The perfluoro organic group may contain an ether oxygen.

Examples of the perfluorovinyl ether include a perfluoro(alkyl vinyl ether) (PAVE) represented by the formula (1) wherein Rf represents a C1-C10 perfluoroalkyl group. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. Preferred is perfluoro(propyl vinyl ether) (PPVE) wherein the perfluoroalkyl group is a perfluoropropyl group.

Examples of the perfluorovinyl ether further include those represented by the formula (1) wherein Rf is a C4-C9 perfluoro(alkoxyalkyl) group, those represented by the formula (1) wherein Rf is represented by the following formula:

[Chem. 1]

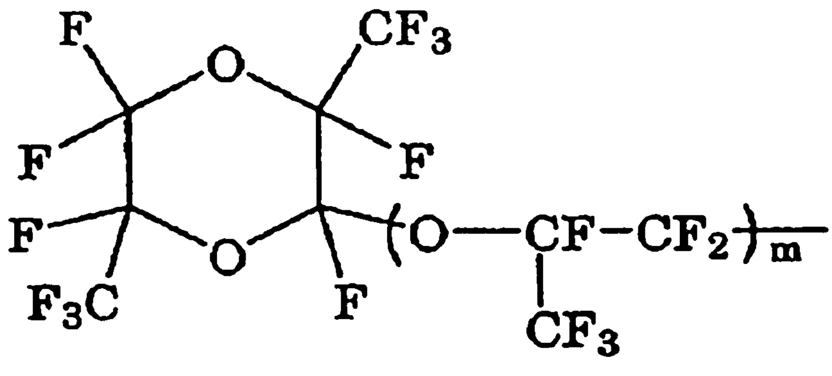

wherein m is 0 or an integer of 1 to 4; and those represented by the formula (1) wherein Rf is a group represented by the following formula:

[Chem. 2]

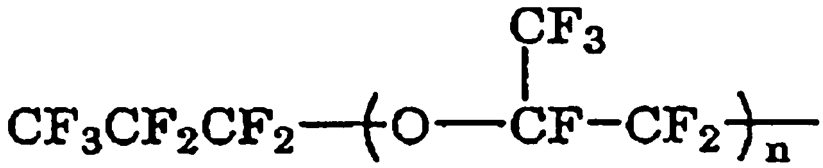

wherein n is an integer of 1 to 4.

Examples of the (perfluoroalkyl)ethylene include, but are not limited to, (perfluorobutyl)ethylene (PFBE), (perfluorohexyl)ethylene (PFHE), and (perfluorooctyl)ethylene.

The modifying monomer in the modified PTFE preferably includes at least one selected from the group consisting of HFP, CTFE, VdF, PPVE, PFBE, and ethylene, more preferably at least one selected from the group consisting of HFP and CTFE.

In the modified PTFE, the amount of the modifying monomer unit is preferably in the range of 0.00001 to 1.0% by mass. The lower limit of the amount of the modifying monomer unit is more preferably 0.0001% by mass, still more preferably 0.001% by mass, even more preferably 0.005% by mass, further preferably 0.010% by mass, particularly preferably 0.030% by mass. The upper limit of the amount of the modifying monomer unit is preferably 0.90% by mass, more preferably 0.50% by mass, still more preferably 0.40% by mass, even more preferably 0.30% by mass.

The term "modifying monomer unit" herein means a moiety that is part of the molecular structure of the modified PTFE and is derived from a modifying monomer.

The PTFE preferably has a melting point of 324°C to 360°C. The melting point of PTFE means the first melting point. The first melting point is the temperature corresponding to the maximum value in a heat-of-fusion curve obtained by heating a PTFE that has no history of being heated up to a temperature of 300°C or higher, at a temperature increase rate of 10°C/min using a differential scanning calorimeter (DSC).

The PTFE preferably has a standard specific gravity (SSG) of 2.130 to 2.280. The standard specific gravity is more preferably 2.220 or lower, still more preferably 2.200 or lower, while it is preferably 2.140 or higher, more preferably 2.150 or higher. The SSG is measured by a water displacement method in conformity with ASTM D-792 using a sample molded in conformity with ASTM D 4895-89.

The PTFE preferably has non-melt secondary processibility. The non-melt secondary processibility means a property that the melt flow rate cannot be measured at a temperature higher than the crystallization melting point in conformity with ASTM D-1238 and D-2116.

The PFA is preferably, but is not limited to, a copolymer having a molar ratio of the TFE unit to the PAVE unit (TFE unit/PAVE unit) of 70/30 or more and less than 99/1, more preferably 70/30 or more and 98.9/1.1 or less, still more preferably 80/20 or more and 98.9/1.1 or less. The PFA is also preferably a copolymer containing 0.1 to 10 mol% of a monomer unit derived from a monomer copolymerizable with TFE and PAVE (a copolymer in which the sum of the TFE unit and the PAVE unit is 90 to 99.9 mol%), more preferably 0.1 to 5 mol% of a monomer unit derived from a monomer copolymerizable with TFE and PAVE, particularly preferably 0.2 to 4 mol% of a monomer unit derived from a monomer copolymerizable with TFE and PAVE.

Examples of the monomer copolymerizable with TFE and PAVE include HFP, a vinyl monomer represented by the formula (I): $CZ^1Z^2=CZ^3(CF_2)_nZ^4$ (wherein $Z^1$, $Z^2$, and $Z^3$ are the same as or different from each other and each represent a hydrogen atom or a fluorine atom; $Z^4$ represents a hydrogen atom, a fluorine atom, or a chlorine atom; and n represents an integer of 2 to 10), an alkyl perfluorovinyl ether derivative represented by the formula (II): $CF_2=CF\text{-}OCH_2\text{-}Rf^1$ (wherein $Rf^1$ represents a C1-C5 perfluoroalkyl group), and an allyl ether monomer represented by the formula (X): $CZ^5Z^6=CZ^7\text{-}CZ^8z^9\text{-}O\text{-}Rf^4$ (wherein $Z^5$, $Z^6$, and $Z^7$ are the same as or different from each other and each represent a hydrogen atom, a chlorine atom, or a fluorine atom; $Z^8$ and $Z^9$ each represent a hydrogen atom or a fluorine atom; and $Rf^4$ represents a C1-C5 perfluoroalkyl group). Examples of the allyl ether monomer include $CH_2=CFCF_2\text{-}O\text{-}Rf^4$, $CF_2=CFCF_2\text{-}O\text{-}Rf^4$ (perfluoroalkyl allyl ether), $CF_2=CFCH_2\text{-}O\text{-}Rf^4$, and $CH_2=CHCF_2\text{-}O\text{-}Rf^4$ (in the formulas, $Rf^4$ is the same as that in the formula (X)).

Examples of the monomer copolymerizable with TFE and PAVE further include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The PFA preferably has a melting point of 180°C or higher and lower than 324°C, more preferably 230°C to 320°C, still more preferably 280°C to 320°C.

The melting point of the PFA refers to a temperature corresponding to the maximum value in a heat-of-fusion curve obtained by a measurement using a differential scanning calorimeter (DSC) at a temperature increase rate of 10°C/min.

The FEP is preferably, but is not limited to, a copolymer having a molar ratio of the TFE unit to the HFP unit (TFE

unit/HFP unit) of 70/30 or more and less than 99/1, more preferably 70/30 or more and 98.9/1.1 or less, still more preferably 80/20 or more and 98.9/1.1 or less. The FEP is also preferably a copolymer containing 0.1 to 10 mol% of a monomer unit derived from a monomer copolymerizable with TFE and HFP (a copolymer in which the sum of the TFE unit and the HFP unit is 90 to 99.9 mol%), more preferably 0.1 to 5 mol% of a monomer unit derived from a monomer copolymerizable with TFE and HFP, particularly preferably 0.2 to 4 mol% of a monomer unit derived from a monomer copolymerizable with TFE and HFP.

Examples of the monomer copolymerizable with TFE and HFP include PAVE, a monomer represented by the formula (X), and an alkyl perfluorovinyl ether derivative represented by the formula (II). Examples of the monomer copolymerizable with TFE and HFP further include unsaturated monocarboxylic acids, unsaturated dicarboxylic acids, acid anhydrides of unsaturated dicarboxylic acids, such as itaconic acid, itaconic anhydride, citraconic anhydride, and 5-norbornene-2,3-dicarboxylic anhydride.

The FEP preferably has a melting point of 150°C or higher and lower than 324°C, more preferably 200°C to 320°C, still more preferably 240°C to 320°C.

The melting point of the FEP refers to a temperature corresponding to the maximum value in a heat-of-fusion curve obtained by a measurement using a differential scanning calorimeter (DSC) at a temperature increase rate of 10°C/min.

The ETFE is preferably a copolymer having a molar ratio of the TFE unit to the ethylene unit (TFE unit/ethylene unit) of 20/80 or more and 90/10 or less, more preferably 37/63 or more and 85/15 or less, still more preferably 38/62 or more and 80/20 or less. The ETFE may also be a copolymer of TFE, ethylene, and a monomer copolymerizable with TFE and ethylene. The ETFE preferably contains 0.1 to 10 mol% of a monomer unit derived from a monomer copolymerizable with TFE and ethylene (a copolymer in which the sum of the TFE unit and the ethylene unit is 90 to 99.9 mol%), more preferably 0.1 to 5 mol% of a monomer unit derived from a monomer copolymerizable with TFE and ethylene, particularly preferably 0.2 to 4 mol% of a monomer unit derived from a monomer copolymerizable with TFE and ethylene.

Examples of the monomer copolymerizable with TFE and ethylene include monomers represented by the following formulas: $CH_2=CX^1Rf^2$, $CF_2=CFRf^2$, $CF_2=CFORf^2$, and $CH_2=C(Rf^2)_2$ (wherein $X^1$ represents a hydrogen atom or a fluorine atom, and $Rf^2$ represents a fluoroalkyl group optionally containing an ether bond), and a monomer represented by the formula (X). Of these, preferred are fluorine-containing vinyl monomers represented by $CF_2=CFRf^2$, $CF_2=CFORf^2$, and $CH_2=CX^1Rf^2$ and a monomer represented by the formula (X). More preferred are HFP, perfluoro(alkyl vinyl ether) represented by $CF_2=CF\text{-}ORf^3$ (wherein $Rf^3$ represents a C1-C5 perfluoroalkyl group), perfluoro(alkyl allyl ether) represented by $CF_2=CF\text{-}CF_2\text{-}O\text{-}Rf^4$ (wherein $Rf^4$ represents a C1-C5 perfluoroalkyl group), and fluorine-containing vinyl monomers represented by $CH_2=CX^1Rf^2$ (wherein $Rf^2$ represents a C1-C8 fluoroalkyl group). Examples of the monomer copolymerizable with TFE and ethylene also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The ETFE preferably has a melting point of 140°C to lower than 324°C, more preferably 160°C to 320°C, still more preferably 195°C to 320°C.

The melting point of the ETFE refers to a temperature corresponding to the maximum value in a heat-of-fusion curve obtained by a measurement using a differential scanning calorimeter (DSC) at a temperature increase rate of 10°C/min.

The amounts of the monomer units in the polymer described above can be calculated by appropriate combinations of NMR, FT-IR, elemental analysis, and X-ray fluorescence analysis depending on the types of the monomers.

The fluororesin has a melt flow rate (MFR) of preferably 5 g/10 min or more, more preferably 10 g/10 min or more, still more preferably 20 g/10 min or more, while preferably 300 g/10 min or less, more preferably 250 g/10 min or less, still more preferably 200 g/10 min or less.

Herein, MFR is measured in accordance with ASTM D-1238 using a die with a diameter of 2.1 mm and a length of 8 mm at a temperature of 372°C and a load of 5 kg.

The fluororesin preferably has 150 or more end functional groups per $10^6$ carbon atoms in the main chain. The number of end functional groups is more preferably 180 or more, still more preferably 200 or more, while preferably 2,000 or less, more preferably 1,000 or less, still more preferably 800 or less. Examples of typical end functional groups include -COF, -COOH, and $-COOCH_3$, and the number means a total number.

The number of end functional groups (end functional group content) can be determined by infrared spectroscopy. Specifically, first, a sample is melt-extruded to form a film with a thickness of 0.25 to 0.3 mm. The film is analyzed by Fourier transform infrared spectroscopy to provide an infrared absorption spectrum of the sample, and a difference spectrum is obtained between the resulting spectrum and a base spectrum without unstable end groups owing to complete fluorination treatment. Based on the absorption peaks of specific unstable end groups appearing in this difference spectrum, the number N of end functional groups per $10^6$ carbon atoms in the sample is calculated using the following formula (A).

$$N = I \times K/t \qquad (A)$$

I: Absorbance
K: Correction coefficient
t: Thickness of film (mm)

The high performance engineering plastic resin may be either crystalline or amorphous and is preferably amorphous.
The high performance engineering plastic resin is preferably a non-fluororesin.
The high performance engineering plastic resin has a thermal decomposition temperature of preferably 330°C or higher, more preferably 350°C or higher, still more preferably 370°C or higher, while preferably 560°C or lower, more preferably 540°C or lower, still more preferably 520°C or lower.
The thermal decomposition temperature of the high performance engineering plastic resin is measured using a thermal analyzer STA7200 available from Hitachi High-Tech Science Corporation. The measurement is performed in an atmosphere purged with nitrogen at 200 mL/min. A sample in an amount of 10 mg is placed in an aluminum pan and maintained at 25°C for 10 minutes. Subsequently, the temperature is increased at a temperature increase rate of 10°C/min to 600°C. In this operation, a temperature (Td5) at which the mass of the sample has decreased by 5% from the initial mass is defined as a thermal decomposition temperature.
The high performance engineering plastic resin has a continuous use temperature of preferably 140°C or higher, more preferably 160°C or higher, still more preferably 170°C or higher. The upper limit is not limited, and the higher, the better. For example, the continuous use temperature may be 260°C.
The term "continuous use temperature" herein refers to a temperature at which the physical property value has decreased by 50% from the initial value during standing still in the air at a specific temperature for 40,000 hours and is measured in conformity with UL746B.
The high performance engineering plastic resin preferably has a glass transition temperature of 180°C or higher, more preferably 200°C or higher, still more preferably 220°C or higher, while preferably 300°C or lower, more preferably 280°C or lower, still more preferably 260°C or lower.
Herein, the glass transition temperature can be determined using a differential scanning calorimeter (DSC822e available from Mettler-Toledo International Inc.). Specifically, 10 mg of a sample is heated at a temperature increase rate of 10°C/min to give a DSC curve, and a temperature is read at the intermediate point of two intersections between each of the extension lines of the base lines before and after the secondary transition of the DSC curve and the tangent line at the inflection point of the DSC curve. The read temperature is determined as a glass transition temperature.
Examples of usable high performance engineering plastic resins include a liquid crystal polymer, polyetherimide, polyphenylene sulfide, polyaryletherketone, polysulfone, and polyethersulfone.
The liquid crystal polymer is not limited and may be a polymer with a liquid crystal transition temperature (i.e., melting point) of 180°C to 380°C. It is preferably a thermotropic liquid crystal polymer which becomes a liquid crystal, such as nematic, when heated. Examples thereof include

a type I liquid crystal polymer (e.g., a biphenol/benzoic acid/p-hydroxy benzoic acid (POB) copolymer),
a type II liquid crystal polymer (e.g., a hydroxy naphthoic acid (HNA)/POB copolymer), and
a type III liquid crystal polymer (e.g., a POB/ethylene terephthalate copolymer). In view of mixing temperature and liquid crystal transition temperature, preferred among these is at least one selected from the group consisting of a type I liquid crystal polymer and a type II liquid crystal polymer, more preferred is a type II liquid crystal polymer.

The liquid crystal polymer preferably has a melting point of 280°C or higher, more preferably 310°C or higher, while preferably 380°C or lower, more preferably 350°C or lower.
Examples of usable polyetherimide include polyetherimide containing an imide bond and an ether bond in the molecule. Polyether imide having a functional group such as an amino group at an end is preferred.
The polyetherimide preferably has a glass transition temperature of 180°C or higher, more preferably 200°C or higher, while preferably 300°C or lower, more preferably 280°C or lower.
Examples of usable polyphenylene sulfide include resins including a structural unit represented by the following formula. The percentage of the structural unit is preferably 70 mol% or more.

-(Ph-S)-

In the formula, Ph represents a phenylene group. Examples of the phenylene group include p-phenylene, m-phenylene, o-phenylene, alkyl-substituted phenylene, phenyl-substituted phenylene, halogen-substituted phenylene,

amino-substituted phenylene, amide-substituted phenylene, p,p'-diphenylene sulfone, p,p'-biphenylene, and p,p'-biphenylene ether. Of these, p-phenylene is preferred.

The polyphenylene sulfide preferably has a melting point of 240°C or higher, more preferably 270°C or higher, while preferably 380°C or lower, more preferably 350°C or lower.

Examples of the polyaryletherketone include polyether ketone (PEK), polyether ether ketone (PEEK), and polyether ketone (PEKK). Of these, PEEK is preferred.

The polyaryletherketone preferably has a melting point of 320°C or higher, more preferably 340°C or higher, while preferably 400°C or lower, more preferably 380°C or lower.

The polysulfone is not limited, and those generally used are usable.

The polysulfone preferably has a glass transition temperature of 180°C or higher, more preferably 200°C or higher, still more preferably 220°C or higher, while preferably 300°C or lower, more preferably 280°C or lower, still more preferably 260°C or lower.

The polyethersulfone is not limited, and those generally used are usable.

The polyethersulfone preferably has a glass transition temperature of 180°C or higher, more preferably 200°C or higher, still more preferably 220°C or higher, while preferably 300°C or lower, more preferably 280°C or lower, still more preferably 260°C or lower.

The melting points of the liquid crystal polymer, the polyetherimide, the polyphenylene sulfide, and the polyaryletherketone each refer to a temperature corresponding to the maximum value in a heat-of-fusion curve obtained by a measurement using a differential scanning calorimeter (DSC) at a temperature increase rate of 10°C/min.

The high performance engineering plastic resin preferably includes at least one selected from the group consisting of a liquid crystal polymer, polyetherimide, polyphenylene sulfide, polyaryletherketone, polysulfone, and polyethersulfone, more preferably includes at least one selected from the group consisting of polyphenylene sulfide, polyaryletherketone, and polyethersulfone, still more preferably includes at least one selected from the group consisting of polyphenylene sulfide, polyether ether ketone, and polyethersulfone, particularly preferably includes at least one selected from the group consisting of polyphenylene sulfide and polyethersulfone.

In the resin composition of the disclosure, the mass ratio of the fluororesin to the high performance engineering plastic resin, fluororesin/high performance engineering plastic resin, is preferably 99/1 to 50/50, more preferably 90/10 to 60/40, still more preferably 85/15 to 65/35, particularly preferably 80/20 to 70/30.

The amount of the fluororesin in the resin composition of the disclosure is preferably 20% by mass or more, more preferably 40% by mass or more, still more preferably 50% by mass or more, while preferably 90% by mass or less, more preferably 85% by mass or less, still more preferably 80% by mass or less.

The amount of the high performance engineering plastic resin in the resin composition of the disclosure is preferably 5% by mass or more, more preferably 10% by mass or more, still more preferably 15% by mass or more, while preferably 40% by mass or less, more preferably 30% by mass or less, still more preferably 25% by mass or less.

The compatibilizer includes a block polymer or a graft polymer each containing a fluorinated polymer segment and a non-fluorinated polymer segment, and a functional compound.

Herein, the block polymer and the graft polymer are each a polymer that is formed of two or more monomers and has a structure in which polymer chains (segments) formed of the same type of monomers are connected to each other. In other words, the compatibilizer has a structure in which a polymer chain consisting of a fluorinated polymer is connected to a polymer chain consisting of a non-fluorinated polymer. The block polymer is a polymer which is not branched, while the graft polymer is a polymer which is branched.

The compatibilizer includes at least one of the block polymer and the graft polymer and may include both of them, and preferably includes at least the block polymer.

The compatibilizer may include a fluorinated polymer or a non-fluorinated polymer that is not included in (is not connected to) the block polymer or the graft polymer.

Examples of the fluorinated polymer in the fluorinated polymer segment include those described regarding the fluororesin, and preferred embodiments are also the same.

The fluorinated polymer forming the fluorinated polymer segment may be a fluororubber.

The fluorinated polymer in the fluorinated polymer segment has a melt flow rate (MFR) of preferably 60 g/10 min or more, more preferably 80 g/10 min or more, still more preferably 100 g/10 min or more, while preferably 300 g/10 min or less, more preferably 250 g/10 min or less, still more preferably 200 g/10 min or less.

To achieve better performance as a compatibilizer, the fluorinated polymer in the fluorinated polymer segment is of the same type as a fluororesin to be added separately from the compatibilizer.

Examples of the non-fluorinated polymer in the non-fluorinated polymer segment include those described regarding the high performance engineering plastic resin, and preferred embodiments are also the same.

The functional compound may be any compound having a functional group. The functional compound may be a polymer, an oligomer, or a low molecular weight compound (for example, monomer) other than the polymer and the oligomer.

The functional compound preferably has two or more functional groups.

Examples of usable functional compounds include a monomer capable of forming an amorphous high performance engineering plastic resin. The monomer preferably includes at least one selected from the group consisting of a carboxyl group-containing compound, an amine, an anhydride, a hydroxyl group-containing compound, an epoxy group-containing compound, a sulfhydryl group-containing compound, and a compound containing a siloxane group and an oxazoline group, more preferably at least one selected from the group consisting of an acid anhydride and a diamine, still more preferably at least one selected from the group consisting of 4,4'-(hexafluoroisopropylidene)diphthalic anhydride (6FDA) and 4,4'-oxydianiline (ODA), particularly preferably a combination of 6FDA and ODA.

The functional compound may be a (co)polymer of these monomers.

The functional compound in the compatibilizer may be bound to or not bound to the block polymer or the graft polymer. Preferably, it is bound to the block polymer or the graft polymer. In other words, the compatibilizer preferably includes a block or graft polymer in which the fluorinated polymer segment, the non-fluorinated polymer segment, and the functional compound are bound to one another.

The compatibilizer may include a functional compound bound to the block polymer or the graft polymer and a functional compound not bound to the block polymer or the graft polymer.

The amount of the fluorinated polymer segment in the compatibilizer is preferably 50% by mass or more, more preferably 60% by mass or more, still more preferably 70% by mass or more, while preferably 95% by mass or less, more preferably 90% by mass or less, still more preferably 85% by mass or less.

The amount of the non-fluorinated polymer segment in the compatibilizer is preferably 5% by mass or more, more preferably 10% by mass or more, still more preferably 13% by mass or more, while preferably 50% by mass or less, more preferably 40% by mass or less, still more preferably 30% by mass or less.

The amount of the functional compound in the compatibilizer is preferably 1% by mass or more, more preferably 3% by mass or more, still more preferably 4% by mass or more, while preferably 30% by mass or less, more preferably 20% by mass or less, still more preferably 10% by mass or less.

The amount of the compatibilizer in the resin composition of the disclosure is preferably 1% by mass or more, more preferably 3% by mass or more, still more preferably 5% by mass or more, while preferably 30% by mass or less, more preferably 25% by mass or less, still more preferably 20% by mass or less.

For example, the compatibilizer can be prepared through a step 1 of applying shear stress to the fluorinated polymer by kneading it with an extruder such as a twin-screw extruder to control the number of end functional groups and MFR of the fluorinated polymer and subsequently a step 2 of kneading the fluorinated polymer having undergone the step 1, the non-fluorinated polymer, and the functional compound.

To control the number of end functional groups and MFR in suitable ranges, the kneading in the step 1 is preferably performed at a kneading temperature of 200°C to 400°C and at a rotational rate of 100 to 3,000 rpm for 1 to 120 minutes.

In the step 2, the functional compound may be added in separate portions to prevent the functional compound from aggregating. As a result, a compatibilizer with excellent dispersion stability can be obtained. In the case of using both 6FDA and ODA, 6FDA may be first added and kneaded, and then ODA may be added. The post addition of ODA can suppress degradation of, for example, PEI due to the ODA.

From the same point of view, in the case of using both 6FDA and ODA, they may be reacted in advance, and a resulting polyamic acid may be added. The polyamic acid is preferably a dimer or an oligomer in view of reactivity.

The non-fluorinated polymer segment in the compatibilizer includes a monomer different from a monomer in the high performance engineering plastic resin.

Herein, when A includes a monomer different from a monomer in B, B at least includes a monomer that is not included in A (hereinafter, also referred to as a different-type monomer), and B may include a monomer included in A in addition to the different-type monomer. For example, when the high performance engineering plastic resin is a type I liquid crystal polymer, for example, a biphenol/benzoic acid/p-hydroxybenzoic acid (POB) copolymer, the non-fluorinated polymer segment includes at least one monomer (different-type monomer) that is different from biphenol, benzoic acid, and p-oxybenzoic acid. The non-fluorinated polymer segment may include any of biphenol, benzoic acid, and p-oxybenzoic acid in addition to the different-type monomer.

The amount of a repeating unit derived from the different-type monomer in the non-fluorinated polymer segment is preferably 1% by mass or more, more preferably 3% by mass or more, still more preferably 5% by mass or more. The upper limit is not limited and may be 100% by mass.

The resin composition of the disclosure preferably contains an oxazoline group-containing compound. Crosslinking reaction mediated by the oxazoline group-containing compound occurs, thereby enhancing the mechanical strength.

The oxazoline group-containing compound may be any compound containing an oxazoline group and may be a polymer, an oligomer, or a low molecular weight compound other than the polymer and the oligomer. Specific examples of the oxazoline group-containing compound include low molecular weight oxazoline compounds such as 2-vinyl-2-oxazoline, 4-methyl-2-vinyl-2-oxazoline, 5-methyl-2-vinyl-2-oxazoline, 4-ethyl-2-vinyl-2-oxazoline, 5-ethyl-2-vinyl-2-oxazoline, 4,4-dimethyl-2-vinyl-2-oxazoline, 4,4-diethyl-2-vinyl-2-oxazoline, 4,5-dimethyl-2-vinyl-2-oxazoline, 4,5-diethyl-2-vinyl-2-oxazoline, 2-isopropenyl-2-oxazoline, 4-methyl-2-isopropenyl-2-oxazoline, 5-methyl-2-isopropenyl-2-oxazoline, 4-ethyl-2-isopropenyl-2-oxazoline, 5-ethyl-2-isopropenyl-2-oxazoline, 4,4-dimethyl-2-isopropenyl-2-oxazoline, 4,4-diethyl-2-isopropenyl-2-oxazoline, 4,5-dimethyl-2-isopropenyl-2-oxazoline, 4,5-diethyl-2-isopropenyl-2-oxazoline, 1,3-phenyl bis oxazoline [1,3-PBO], and 1,4-phenyl bis oxazoline [1,4-PBO]; and oxazoline group-containing polymers such as homopolymers of the above-described low molecular weight oxazoline group-containing compounds (e.g., poly-2-vinyl-2-oxazoline [Pvozo], poly-2-isopropenyl-2-oxazoline [Pipovo]) and copolymers of the above-described low molecular weight oxazoline group-containing compounds and other monomers. Each of these may be used alone, or two or more of these may be used in combination. Preferred among these are low molecular weight compounds, more preferred are 1,3-PBO and 1,4-PBO, and still more preferred is 1,3-PBO because they can greatly improve the mechanical strength.

The oxazoline group-containing polymer preferably includes at least one selected from the group consisting of a 2-vinyl-2-oxazoline-derived repeating unit and a 2-isopropenyl-2-oxazoline-derived repeating unit, more preferably includes at least one selected from the group consisting of Pvozo and Pipovo, still more preferably includes Pvozo because such an oxazoline group-containing polymer can greatly improve the mechanical strength.

The oxazoline group-containing polymer is also preferably a copolymer of 2-vinyl-2-oxazoline or 2-isopropenyl-2-oxazoline and any other monomer, more preferably a copolymer of 2-vinyl-2-oxazoline or 2-isopropenyl-2-oxazoline and an acrylic monomer, still more preferably a copolymer of 2-isopropenyl-2-oxazoline and an acrylic monomer.

The oxazoline group-containing polymer may have an oxazoline group at an end, on a side chain, or both an end and on a side chain. Preferably, it has an oxazoline group at least at an end.

The oxazoline group-containing polymer may have a branched structure. Such a branched oxazoline group-containing polymer may have an oxazoline group on the main chain, on a branched chain, or both on the main chain and a branched chain. Preferably, it has an oxazoline group at least on the main chain, more preferably at an end of the main chain.

The oxazoline group-containing polymer preferably has a molecular weight of 2,000 or more, more preferably 5,000 or more, still more preferably 10,000 or more, while preferably 400,000 or less, more preferably 300,000 or less, still more preferably 200,000 or less.

The molecular weight of the oxazoline group-containing polymer is the number average molecular weight (Mn), which can be determined based on the PS-equivalent average molecular weight obtained by GPC measurement.

The oxazoline group-containing compound preferably contains multiple (two or more) oxazoline groups, more preferably contains 10 or more oxazoline groups, still more preferably 100 or more oxazoline groups. The upper limit is not limited. Generally, the upper limit is 1,000 or less.

The amount of the oxazoline group-containing compound in the resin composition of the disclosure relative to the total amount, taken as 100 parts by mass, of components other than the oxazoline group-containing compound is preferably 0.01 parts by mass or more, more preferably 0.05 parts by mass or more, still more preferably 0.1 parts by mass or more, while preferably 20 parts by mass or less, more preferably 10 parts by mass or less, still more preferably 5 parts by mass or less.

The resin composition of the disclosure may further include an additive. Examples of the additive include additives generally used in resins, such as a filler, a crosslinking agent, an antistatic agent, a heat resistance stabilizer, a foaming agent, a foam nucleating agent, an antioxidant, a surfactant, a photopolymerization initiator, an anti-wear agent, and a surface modifier.

The resin composition of the disclosure is preferably solid or liquid at 25°C, and is more preferably solid at 25°C.

The resin composition of the disclosure may be produced by any method. For example, it may be produced by kneading the materials by a usual kneading method such as melt-kneading. The kneading may be performed using any apparatus, including a generally used apparatus such as a twin-screw extruder or a batch-type kneader.

<Molded body>

The molded body of the disclosure includes the resin composition of the disclosure. The molded body can be obtained by molding the composition of the disclosure. The molding may be performed by any method, including a usual method such as injection molding, blow molding, inflation molding, or vacuum/pressure molding.

The molded body of the disclosure is preferably used as a dielectric material, in particular, a low dielectric substrate material (e.g., insulating material).

The term "low dielectric substrate material" herein refers to a material having a relative permittivity at 25°C and 10 GHz of 5.0 or lower and a dissipation factor at 25°C and 10 GHz of 0.003 or lower; more preferably a material having a relative permittivity at 25°C and 10 GHz of 4.0 or lower and a dissipation factor at 25°C and 10 GHz of 0.002 or lower; still more preferably a material having a relative permittivity at 25°C and 10 GHz of 3.5 or lower and a dissipation factor at 25°C and 10 GHz of 0.0012 or lower.

The molded body of the disclosure as a dielectric material may be used in any application. The molded body can be used in a wide range of applications, including electrical and electronic parts such as a connector, a socket, a relay part, a coil bobbin, an optical pickup, an oscillator, a printed wiring board, and a computer-related part; semiconductor manufacturing process-related parts such as an IC tray and a wafer carrier; household electric appliance parts for products such as a VTR, a television, an iron, an air conditioner, a stereo, a vacuum cleaner, a refrigerator, a rice cooker, and a lighting equipment; lighting equipment parts such as a lamp reflector and a lamp holder; audio product parts such as a compact disc and a speaker; communication equipment parts such as an optical cable ferrule, a telephone part, a facsimile part, and a modem; copier-related parts such as a separation claw and a heater holder; mechanical parts such as an impeller, a fan, a cog, a gear, a bearing, a motor part, and a housing; automotive parts such as an automotive mechanical part, an engine part, an engine room internal part, an electrical component, and an interior part; cooking utensils such as a microwave cooking pot and a heat-resistant tableware; building materials and civil construction materials such as a heat and sound insulation material (e.g., a floor material, a wall material), a supporting material (e.g., a beam, a pillar), and a roofing material; components for aircraft, spacecraft, or space equipment, components for radiation facilities (e.g., nuclear reactors), marine facility component, washing jigs, optical instrument parts, valves, pipes, nozzles, filters, membranes, medical device parts and medical materials, sensor parts, and sanitary products.

The molded body of the disclosure may be in the form of a laminate with metal foil. Such a laminate is suitably used as a circuit board, in particular, a printed circuit board, a laminated circuit board (multilayer circuit board), or a high-frequency circuit board.

The high frequency circuit board is a circuit board that is operable in a high frequency band. The high frequency band may be a band of 1 GHz or higher, preferably a band of 3 GHz or higher, more preferably a band of 5 GHz or higher. The upper limit may be, but is not limited to, a band of 100 GHz or lower.

Examples of the metal of the metal foil include aluminum, iron, silver, gold, and ruthenium. Alloys of these metals are also usable. Copper is preferred among these. Examples of usable copper include rolled copper and electrolytic copper.

The laminate preferably has a thickness of 10 μm to 1,000 μm. The molded body of the disclosure in the laminate preferably has a thickness of 1 μm to 100 μm.

The laminate and the molded body are each preferably in the form of a sheet with a substantially constant thickness. When the sheet includes portions with different thicknesses, the thickness refers to an average of the thicknesses measured at 10 points equally spaced along the longitudinal direction.

<Compatibilizer>

The compatibilizer of the disclosure includes a block copolymer or a graft polymer each containing a fluorinated polymer segment and a non-fluorinated polymer segment, and a functional compound, a fluorinated polymer in the fluorinated polymer segment having a melt flow rate of 60 g/10 min or more, the fluorinated polymer in the fluorinated polymer segment having 150 or more end functional groups per $10^6$ carbon atoms in the main chain.

The compatibilizer of the disclosure can improve the compatibility of the fluororesin, so that, for example, the fluororesin can uniformly mix with the high performance engineering plastic resin.

Although the compatibilizer of the disclosure includes a monomer different from a monomer in the high performance engineering plastic resin, it sufficiently exhibits the effect as a compatibilizer, so that the fluororesin can uniformly mix with the high performance engineering plastic resin.

In other words, the compatibilizer of the disclosure can be used in a resin composition containing a fluororesin and a high performance engineering plastic resin in which the high performance engineering plastic resin includes a monomer different from a monomer in the non-fluorinated polymer segment.

Examples of the fluorinated polymer in the fluorinated polymer segment include those described regarding the compatibilizer in the resin composition of the disclosure, and preferred embodiments are also the same.

Examples of the non-fluorinated polymer in the non-fluorinated polymer segment include those described regarding the compatibilizer in the resin composition of the disclosure, and preferred embodiments are also the same.

Although some embodiments are described above, it will be understood that various changes in the embodiments and the details can be made without departing from the gist and scope of the Claims.

EXAMPLES

The disclosure will be described in more detail with reference to examples, but the disclosure is not limited only to these examples.

The materials used in examples are as follows.

(Materials of compatibilizer)

PFA-00 (TFE unit/PPVE unit (molar ratio) = 97.9/2.1, melting point: 300°C, MFR: 25 g/10 min, number of end functional groups per $10^6$ carbon atoms in the main chain: 66)
PFA-01 (TFE unit/PPVE unit (molar ratio) = 97.9/2.1, melting point: 300°C, MFR: 110 g/10 min, number of end functional groups per $10^6$ carbon atoms in the main chain: 383)
PEI: (polyetherimide having an amino group at an end, thermal decomposition temperature: 529°C, continuous use temperature: 170°C, Tg: 201°C)
6FDA: (4,4'-(hexafluoroisopropylidene)diphthalic anhydride)
ODA: (4,4'-oxydianiline)

(Fluororesin)

PFA-1 (TFE unit/PPVE unit (molar ratio) = 97.2/2.8, melting point: 301°C, MFR: 66 g/10 min, number of end functional groups per $10^6$ carbon atoms in the main chain: 247)
PFA-2 (TFE unit/PPVE unit (molar ratio) = 97.9/2.1, melting point: 300°C, MFR: 25 g/10 min, number of end functional groups per $10^6$ carbon atoms in the main chain: 66)

(High performance engineering plastic resin)

PES (polyethersulfone, amorphous resin, thermal decomposition temperature: 518°C, continuous use temperature: 180°C, Tg: 225°C)
PPS (polyphenylene sulfide, crystalline resin, thermal decomposition temperature: 492°C, continuous use temperature: 220°C, Tg: 90°C)

(Oxazoline group-containing compound)

1,3-PBO (1,3-phenyl bis oxazoline, available from Tokyo Chemical Industry Co., Ltd.)

(Production Example 1)

An amount of 21.5 g of a fluororesin (PFA-00) was put in a micro circulation compounder (Xplore available from DSM) and kneaded at 390°C and 500 rpm for five minutes to control the number of end functional groups and MFR.

The controlled fluororesin (PFA-01), polyetherimide (PEI) having an amino group at an end, and 6FDA were kneaded in the micro circulation compounder at 370°C and 500 rpm for two minutes, and then ODA was added thereto, followed by further kneading for three minutes to obtain a compatibilizer.

The compatibilizer obtained in Production Example 1 was a block polymer in which a segment (segment A) formed of PFA, which is a fluorinated polymer, a segment (segment B) formed of PEI, which is a non-fluorinated polymer, and a segment (segment C) formed of 6FDA and ODA, which are functional compounds, are connected to one another. The amounts of the segment A, B, and C were 81.8% by mass, 13.6% by mass, and 4.6% by mass, respectively. The fluorinated polymer forming the segment A had MFR of 110 g/10 min and 383 end functional groups per $10^6$ carbon atoms in the main chain. The non-fluorinated polymer forming the segment B had a thermal decomposition temperature of 529°C, a continuous use temperature of 170°C, and Tg of 201°C.

Examples 1 to 6, Comparative Examples 1 and 2

The materials in amounts (parts by mass) indicated in Table 1 or 2 were dry-mixed. The mixture was put in a micro circulation compounder and kneaded at 370°C and 500 rpm for five minutes to obtain a resin composition.

The obtained resin composition was evaluated by the methods described below. Tables 1 and 2 and FIGs. 1 to 8 show the results.

(Dispersion state)

The resin composition was cut in a direction perpendicular to the longitudinal direction to obtain a specimen. The cross-section of the specimen was observed with a confocal laser scanning microscope.

(Dispersibility)

The laser microscopic image obtained above was analyzed using image analysis software (Image J) to determine an equivalent circular diameter of the dispersed phase. The equivalent circular diameters of 20 dispersed phases were determined and averaged. The average was defined as a dispersed particle size. The resin composition was rated as "◦" when the dispersed particle size was less than 2.5 μm or as "×" when the dispersed particle size was 2.5 μm or more.

(Surface appearance)

The appearance of the resin composition was visually observed. The resin composition was rated as "◦" when the surface was glossy and not rough or as "×" when the surface was rough.

[Table 1]

| | | Example | | | | | Comparative Example |
|---|---|---|---|---|---|---|---|
| | | 1 | 2 | 3 | 4 | 5 | 1 |
| Composition | PFA-1 | 75 | 70 | 60 | | | 80 |
| | PFA-2 | | | | 70 | 60 | |
| | PES | 20 | 20 | 20 | 20 | 20 | 20 |
| | Compatibilizer | 5 | 10 | 20 | 10 | 20 | |
| Physical properties | Dispersed particle size (μm) | 1.28 | 0.37 | 0.39 | 1.68 | 1.25 | 3.03 |
| | Dispersibility | ○ | ○ | ○ | ○ | ○ | × |
| | Surface appearance | ○ | ○ | ○ | ○ | ○ | × |

[Table 2]

| | | Example | Comparative Example |
|---|---|---|---|
| | | 6 | 2 |
| Composition | PFA-2 | 70 | 80 |
| | PPS | 20 | 20 |
| | Compatibilizer | 10 | |
| Physical properties | Dispersed particle size (μm) | 2.11 | 2.55 |
| | Dispersibility | ○ | × |
| | Surface appearance | ○ | × |

Examples 7 and 8, Comparative Example 3

A resin composition was produced using the materials in amounts (parts by mass) indicated in Table 3 as in Example 1.

The resin composition was molded by vacuum press under the following conditions to obtain a molded body.

Apparatus: manual hydraulic vacuum heat press, model: IMC-46E2-3, available from Imoto machinery Co., LTD
Drying conditions: None
Molding temperature: 330°C (in vacuum)
Molding pressure: The specimen was put in the apparatus and a contact pressure was applied thereto for one minute, and the pressure was increased to 10 MPa over two minutes.
Cooling: water cool press at 10 MPa for about 17 minutes
Dimension: 100 mm × 100 mm × t 0.3 mm
Number of produced sample: one in each example
Note: The apparatus was used after applying a release agent to a mirror plate and a mold (spacer), sandwiching them between two pieces of stainless steel fabric (cushioning material) each covered by a stainless steel plate (5 mm pressure), and preheating at 330°C by vacuum press.

The obtained molded body was evaluated by the method described below. The resin composition was also evaluated by the methods as in Example 1. Table 3 shows the results.

(Tensile modulus, Stress at break, Elongation at break)

The molded body was subjected to a test using a tensile tester (TENSILON) at a tensile rate of 10 mm/min to determine a tensile modulus, a stress at break, and an elongation at break.

[Table 3]

| | | Example | | Comparative Example |
|---|---|---|---|---|
| | | 7 | 8 | 3 |
| Composition | PFA-2 | 70 | 70 | 80 |
| | PES | 20 | 20 | 20 |
| | Compatibilizer | 10 | 10 | |
| | Oxazoline group-containing compound | 0.25 | 1 | |
| Physical properties | Dispersibility | ○ | ○ | × |
| | Surface appearance | ○ | ○ | × |
| | Tensile modulus (MPa) | 485 | 503 | 478 |
| | Stress at break (MPa) | 16 | 16 | 16 |
| | Elongation at break (%) | 99 | 72 | 21 |

## Claims

**1.** A resin composition comprising

a fluororesin,
a high performance engineering plastic resin, and
a compatibilizer,
the compatibilizer comprising a block polymer or a graft polymer each containing a fluorinated polymer segment and a non-fluorinated polymer segment, and a functional compound,
the high performance engineering plastic resin including a monomer different from a monomer in the non-fluorinated polymer segment.

**2.** The resin composition according to claim 1,
wherein the fluororesin includes a perfluororesin.

**3.** The resin composition according to claim 1 or 2,
wherein the fluororesin includes at least one selected from the group consisting of a tetrafluoroethylene/perfluoro(alkyl vinyl ether) copolymer and a tetrafluoroethylene/hexafluoropropylene copolymer.

**4.** The resin composition according to any one of claims 1 to 3,
wherein the high performance engineering plastic resin includes at least one selected from the group consisting of a liquid crystal polymer, polyetherimide, polyphenylene sulfide, polyaryletherketone, polysulfone, and polyethersulfone.

**5.** The resin composition according to any one of claims 1 to 4,
wherein the high performance engineering plastic resin includes at least one selected from the group consisting of polyphenylene sulfide and polyethersulfone.

**6.** The resin composition according to any one of claims 1 to 5,

wherein the compatibilizer is contained in an amount of 1 to 30% by mass.

7. The resin composition according to any one of claims 1 to 6, wherein the compatibilizer is contained in an amount of 5 to 20% by mass.

8. The resin composition according to any one of claims 1 to 7, wherein a mass ratio of the fluororesin to the high performance engineering plastic resin, fluororesin/high performance engineering plastic resin, is 99/1 to 50/50.

9. The resin composition according to any one of claims 1 to 8, wherein a mass ratio of the fluororesin to the high performance engineering plastic resin, fluororesin/high performance engineering plastic resin, is 90/10 to 70/30.

10. The resin composition according to any one of claims 1 to 9, wherein a fluorinated polymer in the fluorinated polymer segment has a melt flow rate of 60 g/10 min or more.

11. The resin composition according to any one of claims 1 to 10, wherein the fluorinated polymer in the fluorinated polymer segment has a melt flow rate of 60 to 300 g/10 min.

12. The resin composition according to any one of claims 1 to 11, wherein the fluorinated polymer in the fluorinated polymer segment has 150 or more end functional groups per $10^6$ carbon atoms in the main chain.

13. The resin composition according to any one of claims 1 to 12, wherein the fluorinated polymer in the fluorinated polymer segment has 150 to 2,000 end functional groups per $10^6$ carbon atoms in the main chain.

14. The resin composition according to any one of claims 1 to 13, wherein the fluorinated polymer in the fluorinated polymer segment includes a perfluororesin.

15. The resin composition according to any one of claims 1 to 14, wherein the fluorinated polymer in the fluorinated polymer segment includes at least one selected from the group consisting of a tetrafluoroethylene/perfluoro(alkyl vinyl ether) copolymer and a tetrafluoroethylene/hexafluoropropylene copolymer.

16. The resin composition according to any one of claims 1 to 15, wherein the functional compound includes a monomer capable of forming an amorphous high performance engineering plastic resin.

17. The resin composition according to any one of claims 1 to 16, wherein the functional compound includes at least one selected from the group consisting of an acid anhydride and diamine.

18. The resin composition according to any one of claims 1 to 17, wherein the functional compound includes at least one selected from the group consisting of 4,4'-(hexafluoroisopropylidene)diphthalic anhydride and 4,4'-oxydianiline.

19. The resin composition according to any one of claims 1 to 18, wherein a non-fluorinated polymer in the non-fluorinated polymer segment has a glass transition temperature of 180°C or higher.

20. The resin composition according to any one of claims 1 to 19, wherein the non-fluorinated polymer in the non-fluorinated polymer segment includes at least one selected from the group consisting of a liquid crystal polymer, polyetherimide, polyphenylene sulfide, polyaryletherketone, polysulfone, and polyethersulfone.

21. The resin composition according to any one of claims 1 to 20, further comprising an oxazoline group-containing compound.

**22.** The resin composition according to any one of claims 1 to 21, which is solid or liquid at 25°C.

**23.** A molded body using the resin composition according to any one of claims 1 to 22.

**24.** A compatibilizer comprising

a block copolymer or a graft polymer each containing a fluorinated polymer segment and a non-fluorinated polymer segment, and
a functional compound,
a fluorinated polymer in the fluorinated polymer segment having a melt flow rate of 60 g/10 min or more,
the fluorinated polymer in the fluorinated polymer segment having 150 or more end functional groups per $10^6$ carbon atoms in the main chain.

**25.** The compatibilizer according to claim 24, which is for use in a resin composition comprising a fluororesin and a high performance engineering plastic resin,
wherein the high performance engineering plastic resin includes a monomer different from a monomer in the non-fluorinated polymer segment.

**26.** The compatibilizer according to claim 24 or 25,
wherein a fluorinated polymer in the fluorinated polymer segment has a melt flow rate of 60 to 300 g/10 min.

**27.** The compatibilizer according to any one of claims 24 to 26,
wherein the fluorinated polymer in the fluorinated polymer segment has 150 to 2,000 end functional groups per $10^6$ carbon atoms in the main chain.

FIG.1

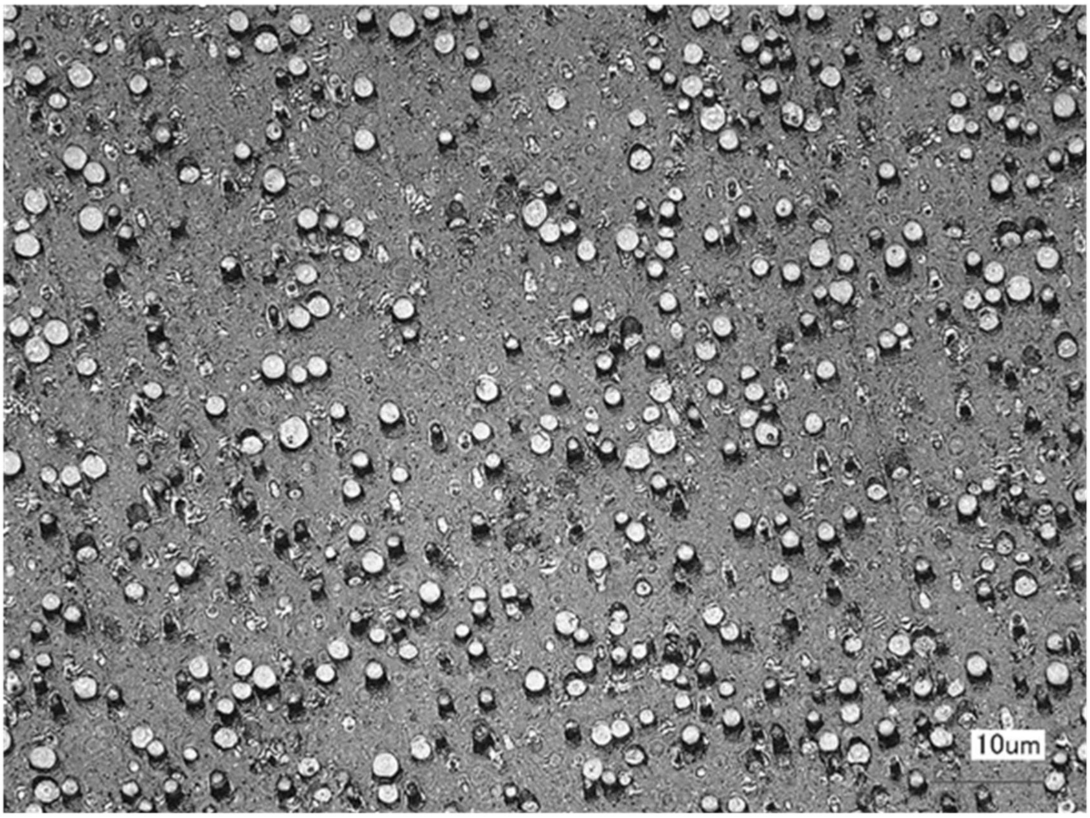

FIG.2

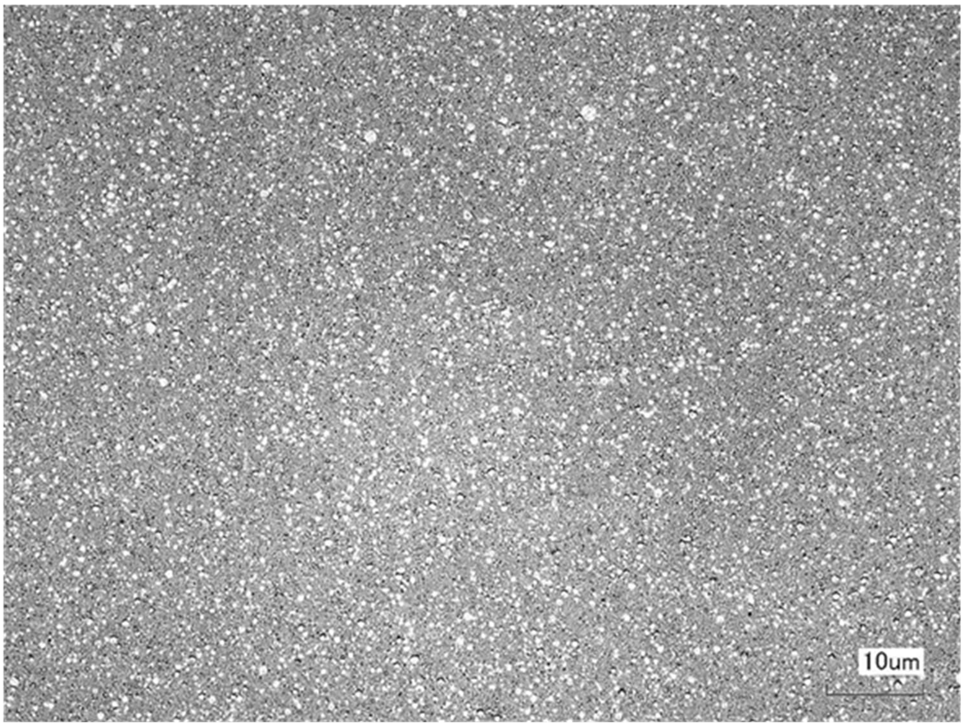


FIG.3

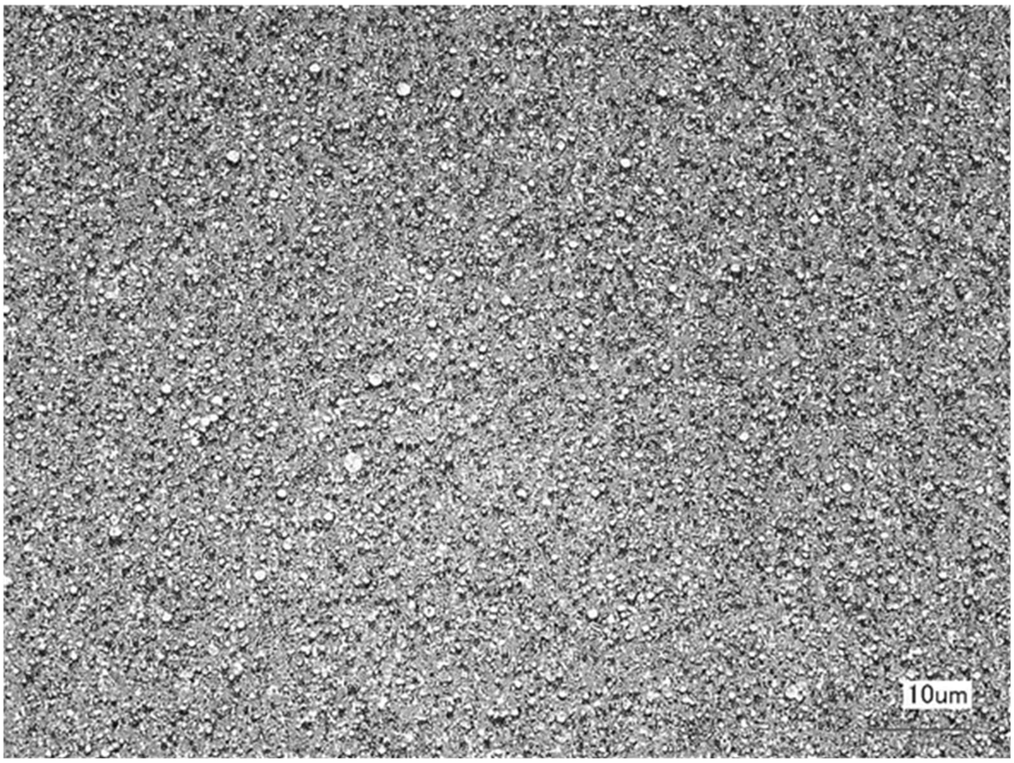

FIG.4

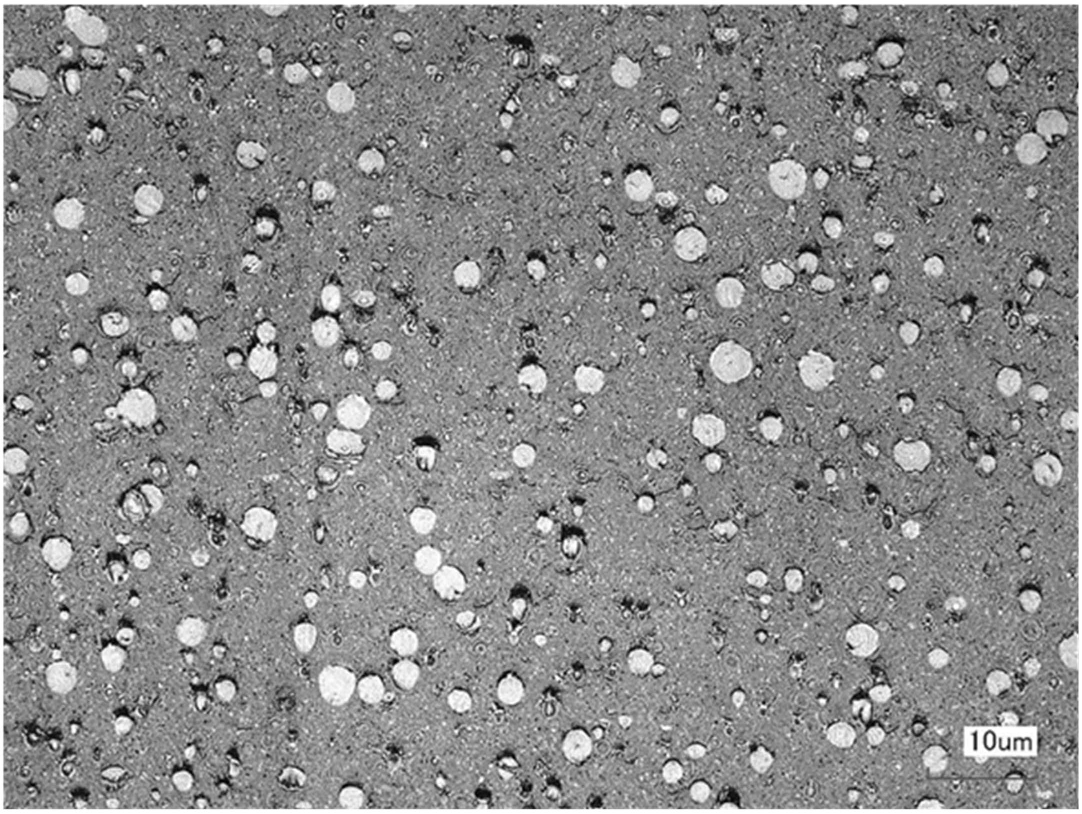

FIG.5

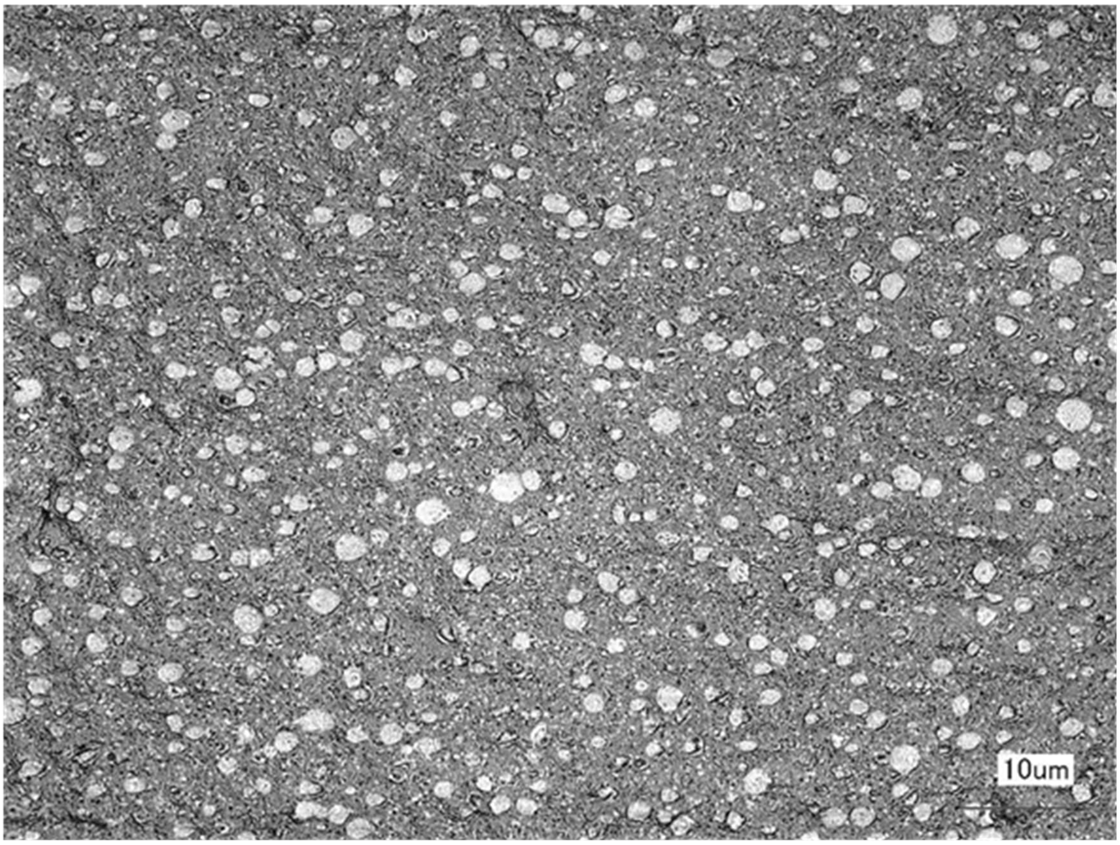

FIG.6

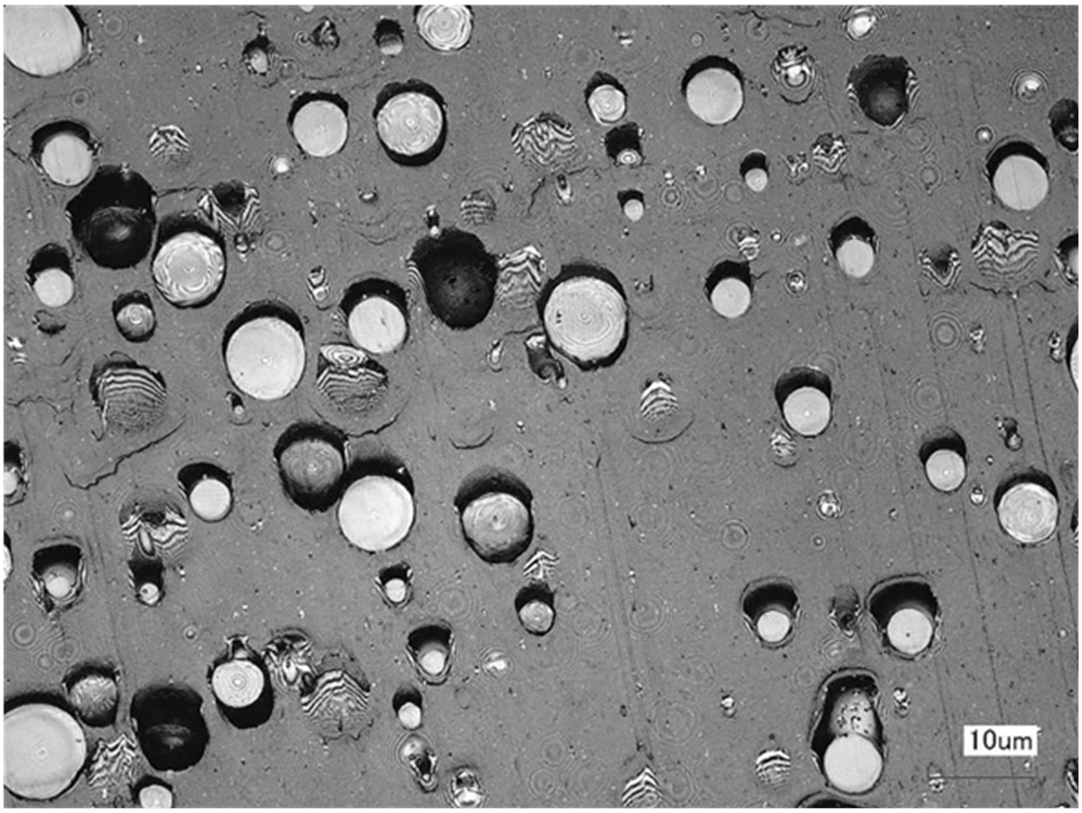

FIG.7

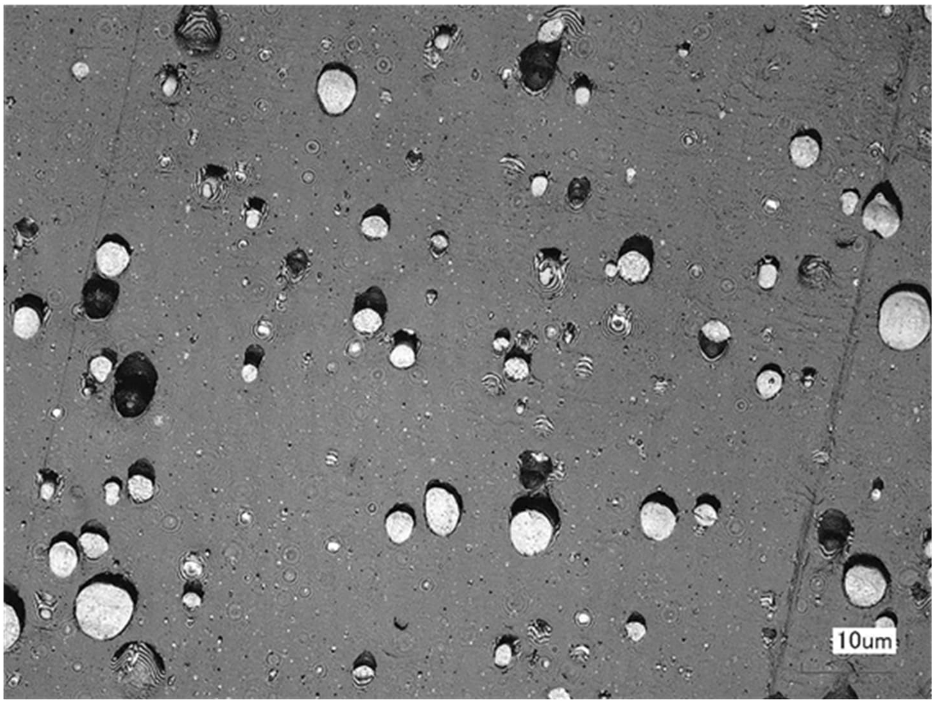


FIG.8

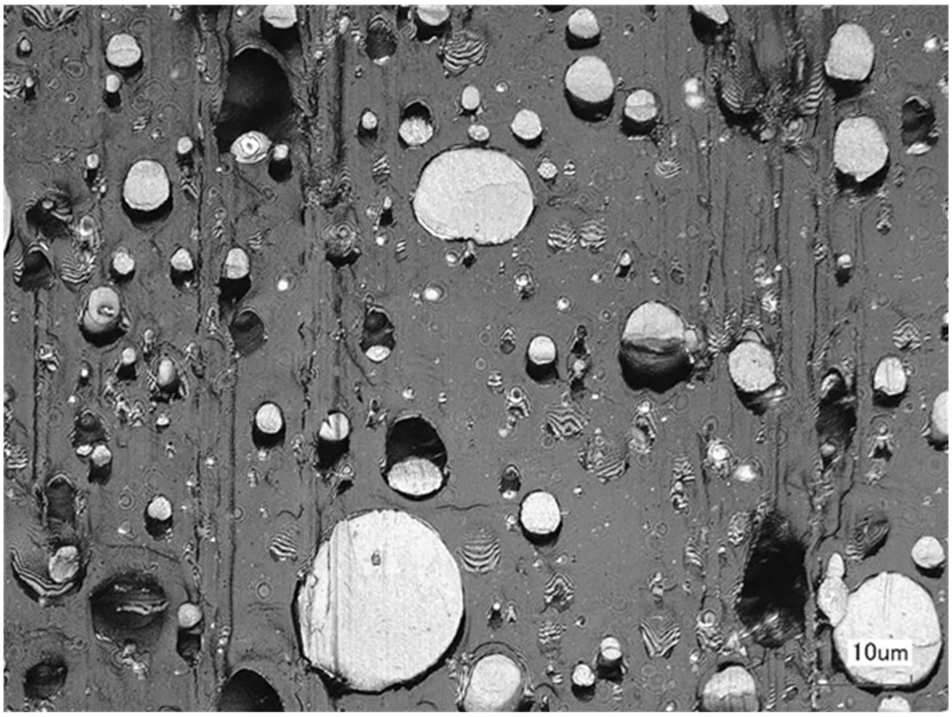

## INTERNATIONAL SEARCH REPORT

International application No.
**PCT/JP2025/012717**

**A. CLASSIFICATION OF SUBJECT MATTER**

***C08L 27/12***(2006.01)i; ***C08K 5/353***(2006.01)i; ***C08L 51/06***(2006.01)i; ***C08L 53/00***(2006.01)i; ***C08L 67/03***(2006.01)i; ***C08L 79/08***(2006.01)i; ***C08L 81/04***(2006.01)i; ***C08L 81/06***(2006.01)i
FI: C08L27/12; C08L79/08 B; C08K5/353; C08L81/06; C08L81/04; C08L53/00; C08L51/06; C08L67/03

According to International Patent Classification (IPC) or to both national classification and IPC

**B. FIELDS SEARCHED**

Minimum documentation searched (classification system followed by classification symbols)

C08L27/12; C08K5/353; C08L51/06; C08L53/00; C08L67/03; C08L79/08; C08L81/04; C08L81/06

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2023-540108 A (DAIKIN AMERICA, INC.) 21 September 2023 (2023-09-21) claims 1, 6, 8, 10, 11, 20, paragraphs [0030]-[0035], [0042], [0044], examples 6, 9 | 1-4, 6-17, 19-27<br>5, 18 |
| X | JP 2023-540107 A (DAIKIN AMERICA, INC.) 21 September 2023 (2023-09-21) claims 1-9, 11-20, paragraphs [0011], [0033], for example, examples 11-13 | 1-27 |
| X<br>A | JP 2022-545248 A (DAIKIN AMERICA, INC.) 26 October 2022 (2022-10-26) claims 1-7, 9-12, paragraphs [0003], [0034]-[0038], for example, example 7, paragraph [0189], tables 27, 28 | 1-4, 6-27<br>5 |
| A | WO 2023/112948 A1 (DAIKIN AMERICA, INC. ) 22 June 2023 (2023-06-22) | 1-27 |
| A | JP 2009-227780 A (DAIKIN INDUSTRIES, LTD.) 08 October 2009 (2009-10-08) | 1-27 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 June 2025** | **24 June 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

## INTERNATIONAL SEARCH REPORT

International application No.
**PCT/JP2025/012717**

**C. DOCUMENTS CONSIDERED TO BE RELEVANT**

| Category* | Citation of document, with indication, where appropriate, of the relevant passages | Relevant to claim No. |
|---|---|---|
| A | US 2005/0197460 A1 (PATEL, Raman et al.) 08 September 2005 (2005-09-08) | 1-27 |
| A | CN 107936251 A (GUANGZHOU PENGYUN ENGINEERING PLASTIC CO., LTD.) 20 April 2018 (2018-04-20) | 1-27 |

Form PCT/ISA/210 (second sheet) (July 2022)

**INTERNATIONAL SEARCH REPORT**
**Information on patent family members**

International application No.
**PCT/JP2025/012717**

| Patent document cited in search report | Publication date (day/month/year) | Patent family member(s) | Publication date (day/month/year) |
|---|---|---|---|
| JP 2023-540108 A | 21 September 2023 | WO 2022/050378 A1<br>claims 1, 6, 8, 10, 11, 20, paragraphs [0030]-[0035], [0042], [0044], examples 6, 9<br>EP 4208508 A1<br>TW 202216844 A<br>CN 116057105 A<br>KR 10-2023-0053659 A | |
| JP 2023-540107 A | 21 September 2023 | WO 2022/050379 A1<br>claims 1-9, 11-20, paragraphs [0011], [0033], for example, examples 11-13<br>EP 4208503 A1<br>TW 202219084 A<br>CN 116209685 A<br>KR 10-2023-0053658 A | |
| JP 2022-545248 A | 26 October 2022 | WO 2021/039997 A1<br>claims 1-7, 9-12, paragraphs [0003], [0034]-[0038], for example, example 7, paragraph [0189], tables 27, 28<br>EP 3986962 A1<br>KR 10-2022-0025836 A<br>CN 114391030 A<br>TW 202112947 A | |
| WO 2023/112948 A1 | 22 June 2023 | JP 2024-545229 A<br>TW 202336136 A | |
| JP 2009-227780 A | 08 October 2009 | (Family: none) | |
| US 2005/0197460 A1 | 08 September 2005 | WO 2005/091840 A2 | |
| CN 107936251 A | 20 April 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023540107 T